# EUROPEAN PATENT SPECIFICATION

(11) **EP 3 732 084 B1**
(45) Date of publication and mention of the grant of the patent: **23.07.2025**
(21) Application number: 18839588.3
(22) Date of filing: 31.12.2018
(51) Int. Cl.: B60W 20/11, B60K 6/48, B60K 6/52, B60K 17/356, B60W 30/188, B60W 20/14, B60W 10/06, B60W 10/08, B60W 30/18, B60K 7/00, B60W 50/00, B60K 1/04

(54) **SUPPLEMENTAL ELECTRIC DRIVE WITH PRIMARY ENGINE RECOGNITION FOR ELECTRIC DRIVE CONTROLLER ADAPTATION AND CROWDSOURCED HYBRID SYSTEM CUSTOMIZATION**
ELEKTRISCHER ZUSATZANTRIEB MIT PRIMÄRMOTORERKENNUNG ZUR ANPASSUNG DER ELEKTRISCHEN ANTRIEBSREGELUNG UND CROWDGESOURCTE HYBRIDSYSTEMANPASSUNG
ENTRAÎNEMENT ÉLECTRIQUE SUPPLÉMENTAIRE AVEC RECONNAISSANCE DE MOTEUR PRIMAIRE POUR ADAPTATION DE DISPOSITIF DE COMMANDE D'ENTRAÎNEMENT ÉLECTRIQUE ET PERSONNALISATION DE SYSTÈME HYBRIDE PARTICIPATIVE

(30) Priority: 31.12.2017 US 201762612540 P; 31.12.2017 US 201762612557 P; 31.12.2017 US 201762612561 P
(43) Date of publication of application: 04.11.2020
(73) Proprietor: Hyliion Inc., Cedar Park TX 78613 (US)
(72) Inventor: RICHTER, Roger, Cedar Park, Texas 78613 (US); NOLAND, Jamie, Cedar Park, Texas 78613 (US); CULBERTSON, Morgan, Cedar Park, Texas 78613 (US)
(74) Representative: Cobbold, Alistair John
(86) International application number: PCT/US2018/068113
(87) International publication number: WO 2019/133957

(56) References cited:
- EP-A2- 2 985 170
- WO-A1-2015/140244
- WO-A1-2017/095425
- CN-A- 106 004 865
- US-A1- 2016 318 421
- HOSEIN SAGHA ET AL: "Modeling and design of a NOx emission reduction strategy for lightweight hybrid electric vehicles", IECON 2009 - 35TH ANNUAL CONFERENCE OF IEEE INDUSTRIAL ELECTRONICS (IECON 2009) - 3-5 NOV. 2009 - PORTO, PORTUGAL, IEEE, PISCATAWAY, NJ, USA, 3 November 2009 (2009-11-03), pages 334 - 339, XP031629594, ISBN: 978-1-4244-4648-3

## Description

### TECHNICAL FIELD

The invention relates generally to hybrid vehicle technology and, in particular, to systems and methods to adapt control strategies for an electric drive axle to particular fuel-fed engine configurations with which the electric drive axle is paired in a through-the-road (TTR) hybrid configuration.

### BACKGROUND ART

The U.S. trucking industry consumes about 51 billion gallons of fuel per year, accounting for over 30% of overall industry operating costs. In addition, the trucking industry spends over $100 billion on fuel annually, and the average fuel economy of a tractor-trailer (e.g., an 18-wheeler) is only about 6.5 miles per gallon. For trucking fleets faced with large fuel costs, techniques for reducing those costs would be worth considering.

Hybrid technology has been in development for use in the trucking industry for some time, and some trucks that exploit multiple power sources have entered the market. However, existing systems are generally focused on hybridizing the primary engine and drivetrain of a heavy truck or tractor unit, while any "dead" axles on truck, tractor unit or attached trailer remain a passive load. Thus, the extent to which fuel efficiency of a trucking fleet may be improved using these technologies has been limited to the fuel efficiencies obtained from improvement of the primary engine and drivetrain itself and the in-fleet adoption of such technologies. As such, conventional applications of hybrid technologies generally presume a fixed pairing of fuel-fed and electrical power sources, wherein a unitary control strategy blends motive torque from the respective power sources and delivers one, the either or both through a unified drivetrain.

Given the large numbers of heavy trucks and tractor units already in service and their useful service lifetimes, the improved hybrid drivetrains that are candidates for introduction in new vehicles would only address a small fraction of existing fleets. Improved techniques, increased adoption and new functional capabilities are all desired.

In particular, techniques that allow (i) the pairing of an electric drive axle (or axles) with a diverse set of fuel-fed engines that already exist and have been adopted in trucking fleets and (ii) the adaptation of through-the-road (TTR) control strategies such as an equivalent consumption minimization strategy (EGMS) or adaptive ECMS technique to the particular, paired-with fuel-fed engine are all desired.

HOSEIN SAGHA ET AL, "Modeling and design of a NOx emission reduction strategy for lightweight hybrid electric vehicles" describes a model for a lightweight urban series-parallel hybrid electric vehicle and an optimal control strategy for reducing fuel consumption and emitted pollutants of the vehicle. Utilized optimal control strategy for power management system of vehicle is designed based on equivalent consumption minimization strategy (ECMS). ECMS has been modified to include an SOC (state of charge) sustaining control and also a NO x reduction control. A gear shifting control strategy in order to improve passenger feeling and vehicle performance during shifting is also included in the system.

EP2985170A2 describes a motor vehicle with a hybrid drive unit which is connected to a traction energy network of the motor vehicle; and an external interface device. The external interface device comprises a bidirectional data interface for exchanging data with an external device and a high-voltage interface for exchanging electrical energy with the external device, the high-voltage interface with the traction energy network of the motor vehicle is connected. The motor vehicle further comprises a control device which is set up to receive identification data and / or operating data from the external device via the data interface, which includes an electrical energy store and / or a power-operated drive unit of the external device, the control device also being set up to control both an energy transmission via the high-voltage interface and control data for the external device as a function of the received identification data and / or operating data to be determined and sent via the data interface to the external device.

WO2017095425A1 describes a system and method of controlling the operation of a transmission using fuel consumption data. The system and method include controlling the operation of a vehicle transmission which is operatively connected to an engine and to a transmission control module having access to a memory. Fuel consumption data for a plurality of engines is converted to engine efficiency loss data representative of the each of the engines' operation. The plurality of patterns, each representative of the operating characteristics of one of plurality of engines, is stored in the memory. Engine operating characteristics are recorded during operation of the vehicle. One of the pluralities of patterns is selected based on the recorded operating characteristics to operate the vehicle in a fuel efficient manner.

### SUMMARY

A control method for a vehicle having an electric drive axle (180) configured to supplement a primary source of motive torque is provided in appended claim 1, according to the present invention. A system is provided in appended claim 6, according to the present invention. It has been discovered that a through the road (TTR) hybridization strategy can facilitate introduction of hybrid electric vehicle technology in a significant portion of current and expected trucking fleets. In some cases, the technologies can be retrofitted onto an existing vehicle (e.g., a truck, a tractor unit, a trailer, a tractor-trailer configuration, at a tandem, etc.). In some cases, the technologies can be built into new vehicles or added to new vehicles in an aftermarket channel. In some cases, one vehicle may be built or retrofitted to operate in tandem with another and provide the hybridization benefits contemplated herein. By supplementing motive forces delivered through a primary drivetrain and fuel-fed engine with supplemental torque delivered at one or more electrically-powered drive axles, improvements in overall fuel efficiency and performance may be delivered, typically without significant redesign of existing components and systems that have been proven in the trucking industry.

More specifically, techniques are employed to recognize a primary fuel-fed engine with which an electrically-powered drive axle is paired and to adapt through-the-road (TTR) control strategies applied at the electrically-powered drive axle to characteristics of the particular, paired-with, fuel-fed engine. In some embodiments, a communication interface is used for retrieval of brake- specific fuel consumption (BSFC) data or the like for a recognized and paired-with fuel- fed engine. While the ability to adapt control strategies applied at the electrically- powered drive axle to the paired-with fuel-fed engine can be particularly advantageous in tractor-trailer configurations where an electrically-powered drive axle (e.g., on a trailer) is paired with an ever changing set of fuel-fed engines (e.g., on tractor), other configurations may also benefit. For example, even in fixed pairings (such as on a unitary vehicle or tractor configured with a 6x2 primary drivetrain and supplemental electric drive axle), the ability to retrieve BSFC type data for a particular, fuel-fed engine and adapt TTR control strategies applied at the electrically-powered drive axle facilitates applications where direct integration with engine controls is difficult, undesirable or ill-advised. In addition, in some embodiments, over-the-air (OTA) updates may be employed to adapt TTR control strategies based on crowdsourced insights for a particular engine/drive train configuration and/or in a manner particular to regional, route, terrain, climatic, weather, vehicle load or other factors.

In general, TTR designs using control strategies such as an equivalent consumption minimization strategy (ECMS) or an adaptive ECMS are contemplated and implemented at the supplemental torque delivering electrically-powered drive axle (or axles) in a manner that follows operational parameters or computationally estimates states of the primary drivetrain and/or fuel-fed engine, but does not itself participate in control of the fuel-fed engine or primary drivetrain. Although BSFC type data generic to a range of fuel-fed engines can be employed (at least initially), BSFC type data particular to the paired-with fuel-fed engine allows an ECMS implementation (or other similar control strategies) to adapt to efficiency curves for the particular fuel-fed engine and to improve overall efficiencies of the TTR hybrid configuration.

### Fuel-Fed Engine Recognition for Electric Drive Controller Adaptation

In some embodiments, an ECMS-type controller for electrically-powered drive axle is not directly responsive to driver-, autopilot- or cruise-type throttle controls of the fuel-fed engine or gear selections by a driver or autopilot in the primary drivetrain. Instead, the controller is responsive to sensed pressure in a brake line for regenerative braking and to computationally-estimated operational states of the fuel-fed engine or of the drive train. In some cases, recognition of a particular fuel-fed engine and observables employed by the controller include information are retrieved via a CANbus or SAE J1939 vehicle bus interface such as commonly employed in heavy-duty trucks. While the ECMS-type controller employed for the electrically-powered drive axle (or axles) adapts to the particular characteristics and current operation of the fuel-fed engine and primary drivetrain (e.g., apparent throttle and gearing), it does not itself control the fuel-fed engine or of the primary drivetrain.

A system, as provided in appended claim 6, includes a vehicle having an electric drive axle configured to supplement, in a through-the-road (TTR) hybrid configuration, motive torque provided by a fuel-fed engine through a primary drivetrain, as well as a controller for the electric drive axle. The controller may be coupled to a controller area network interface to retrieve a signature indicative of the fuel-fed engine, the controller further may be coupled to retrieve from an information store brake-specific fuel consumption (BSFC) type data based on the retrieved indicative signature and thereby adapt operation of the controller and electric drive axle to the fuel-fed engine.

The controller may not be directly responsive to controls of the fuel-fed engine and primary drivetrain, but instead controls motive torque supplied by the electric drive axle in accordance with a TTR equivalent consumption minimization strategy (ECMS) applied at the controller using the retrieved BSFC type data to characterize efficiency of the fuel-fed engine with which the electric drive axle is paired in the through-the-road (TTR) hybrid configuration. In some cases or embodiments, the retrieved BSFC type data maps at least fuel-fed engine operating points to fuel consumption. in some cases or embodiments, the retrieved BSFC type data maps fuel-fed engine and primary drivetrain operating points to fuel consumption.

In some cases or embodiments, the vehicle includes a tractor unit having the fuel-fed engine, the primary drivetrain, the electric drive axle and the controller therefor. In some cases or embodiments, the controller area network interface includes a J1939 interface by which the controller is coupled to an engine control module of the tractor unit. In some cases or embodiments, the retrieved signature is indicative of both the fuel-fed engine and the primary drivetrain of the tractor unit.

In some embodiments, the system further includes a trailer portion mechanically coupled to the tractor unit. In some embodiments, the system further includes the frailer portion having an additional electric drive axle coupled to the controller.

In some cases or embodiments, the vehicle includes a trailer portion having the electric drive axle and the controller therefor. The vehicle is mechanically coupled to a first tractor unit that includes the fuel-fed engine and the primary drivetrain to provide a first tractor-trailer vehicle configuration for which a first set of the retrieved brake-specific fuel consumption (BSFC) type data adapts operation of the controller and electric drive axle to the fuel-fed engine of the first tractor-trailer vehicle configuration. The vehicle is also mechanically couplable to a second tractor unit that includes a second fuel-fed engine and primary drivetrain to provide a second tractor-trailer vehicle configuration for which a second set of the BSFC type data, once retrieved, adapts operation of the controller and electric drive axle to the fuel-fed engine of the second tractor-trailer vehicle configuration.

In some cases or embodiments, the controller area network interface includes a J1939 interface by which the controller is coupled to an engine control module of the first tractor unit and whereby the controller is couplable to an engine control module of the second tractor unit to retrieve the signature, the retrieved signature being respectively indicative of either the first or the second fuel-fed engine. In some embodiments, the system further includes, on the first tractor, an additional electric drive axle.

In some embodiments, the system further includes a network-connected service platform that at least partially hosts the information store; and a wireless data communication interface by which the controller retrieves the BSFC type data from the information store. In some cases or embodiments, the retrieval of the BSFC type data by the controller is via the network-connected service platform and is responsive to the retrieval of the signature indicative of the fuel-fed engine, at least upon recognition of a new signature after coupling to the controller area network interface. In some cases or embodiments, the retrieval of the BSFC type data by the controller is via the network-connected service platform and is responsive to a command received over the radio frequency data communication interface. In some cases or embodiments, for at least some signatures recognized after coupling to the controller area network interface, the retrieval of the BSFC type data by the controller from a portion of the information store hosted locally on the vehicle.

In some cases or embodiments, the locally hosted portion of the information store is updated with BSFC type data retrieved via the network-connected service platform periodically, on-demand, or in response to a command received over the radio frequency data communication interface In some cases or embodiments, the retrieval of the BSFC type data and the adaptation of the controller are performed automatically as part of an initial pairing, on the vehicle, of the controller and electric drive axle with the fuel-fed engine.

In some cases or embodiments, the BSFC type data includes one or more of: a machine-readable encoding of multi-dimensional data characterizing efficiency of a corresponding fuel-fed engine as a function of at least engine torque related measure and an engine speed related measure; a machine-readable encoding of BSFC curves or surfaces; and a machine-readable encoding of data derivative of either or both of the foregoing.

In some embodiments, the system further includes an energy store on the vehicle, the energy store configured to supply the electrically powered drive axle with electrical power in a first mode of operation and further configured to receive energy recovered using the first electrically powered drive axle in a second mode of operation.

In some embodiments, a method of configuring a vehicle having an electric drive axle to supplement, in a through-the-road (TTR) hybrid configuration, motive torque provided through a primary drivetrain by a fuel-fed engine, includes the following: (i) via a controller area network interface, retrieving a signature indicative of the fuel-fed engine; (ii) retrieving using the retrieved indicative signature, brake-specific fuel consumption (BSFC) type data for the fuel-fed engine; and (iii) adapting operation of a controller for the electric drive axle to the fuel-fed engine using the retrieved brake-specific fuel consumption (BSFC) type data.

In some embodiments, the method further includes supplying supplemental motive torque using the electric drive axle in accordance with an equivalent consumption minimization strategy (ECMS) applied at the controller using the retrieved BSFC type data. In some cases or embodiments, the retrieval of the BSFC type data is performed at least upon recognition of a new signature after coupling to the controller area network interface. In some cases or embodiments, the retrieval of the BSFC type data is from a network-connected service platform via a wireless data communication interface of the vehicle.

In some cases or embodiments, the retrieval of the BSFC type data is responsive to a command received over the wireless data communication interface In some cases or embodiments, for at least some signatures recognized after coupling to the controller area network interface, the retrieval of the BSFC type data is from an information store hosted locally on the vehicle. In some embodiments, the method further includes updating the locally hosted information store with BSFC type data retrieved via a network-connected service platform periodically, on-demand, or in response to a command received over a radio frequency data communication interface.

In some embodiments, the method further performing the adaptation automatically as part of an initial pairing, on the vehicle, of the controller and electric drive axle with the fuel-fed engine. In some cases or embodiments, the vehicle includes a tractor unit having the fuel-fed engine, the primary drivetrain, the electric drive axle and the controller therefor.

In some cases or embodiments, the vehicle includes a trailer having the controller and the electric drive axle and a tractor unit. The method further includes: reconfiguring the vehicle to instead couple to a different tractor unit having a second fuel-fed engine; via the controller area network interface, retrieving a second signature indicative of the second fuel-fed engine; retrieving using the retrieved second indicative signature, brake-specific fuel consumption (BSFC) type data for the second fuel-fed engine; and adapting operation of a controller for the electric drive axle to the second fuel-fed engine using the retrieved brake-specific fuel consumption (BSFC) type data.

In some embodiments, the method further includes supplying supplemental motive torque using the electric drive axle in accordance with an equivalent consumption minimization strategy (ECMS) applied at the controller using the retrieved BSFC type data to characterize efficiency of the particular fuel-fed engine with which the electric drive axle is paired in the through-the-road (TTR) hybrid configuration.

### Electric Drive Controller Adaptation to TTR Coupled Primary Drivetrain

As provided in appended claim 1, a control method for a vehicle having an electric drive axle configured to supplement a primary source of motive torque includes the following: (i) through a primary drivetrain, supplying motive torque generated using a particular fuel-fed engine; (ii) during over-the-road travel, supplying supplemental motive torque using the electric drive axle, wherein an electric drive controller therefor applies an equivalent consumption minimization strategy (ECMS) using a first set of brake-specific fuel consumption (BSFC) type data based on a plurality of fuel-fed engines to characterize efficiency of the particular fuel-fed engine with which the electric drive axle is paired in a through-the-road (TTR) hybrid configuration; and (iii) adapting the application of the ECMS based on a second set of BSFC type data based on a signature of the particular fuel-fed engine and thereafter continuing to supply supplemental motive torque during over-the-road travel using the electric drive axle under control of the electric drive controller with the adapted ECMS applied.

In some cases or embodiments, the electric drive controller is not directly responsive to controls of the fuel-fed engine and primary drivetrain, but instead controls motive torque supplied by the electric drive axle using the first and adapted second sets of BSFC type data to characterize efficiency of the fuel-fed engine with which the electric drive axle is paired in the through-the-road (TTR) hybrid configuration.

In some cases or embodiments, the vehicle includes a tractor unit having the fuel-fed engine, the primary drivetrain, the electric drive axle and the electric drive controller therefor. In some cases or embodiments, the vehicle further includes a trailer portion having an additional electric drive axle coupled to the electric drive controller via a controller area network interface.

In some cases or embodiments, the vehicle includes a tractor unit having the fuel-fed engine and the primary drivetrain, and the vehicle further includes a trailer portion having the electric drive axle and the electric drive controller therefor. In some cases or embodiments, the first and adapted second sets of BSFC type data each include one or more of: a machine readable encoding of multi-dimensional data characterizing efficiency of a corresponding fuel-fed engine as a function of at least engine torque related measure and an engine speed related measure; a machine readable encoding of BSFC curves or surfaces; and a machine readable encoding of data derivative of either or both of the foregoing.

In some cases or embodiments, the first and adapted second sets of BSFC type data each map at least fuel-fed engine operating points to fuel consumption. In some cases or embodiments, the first and adapted second sets of BSFC type data each map fuel-fed engine and primary drivetrain operating points to fuel consumption. In some cases or embodiments, the first set of BSFC type data includes a data set generic to a first range of fuel-fed engines configurations that includes the first fuel-fed engine.

In some cases or embodiments, the second set of BSFC type data is particular to the first fuel-fed engine. In some cases or embodiments, the second set of BSFC type data for a second range of fuel-fed engines configurations, the second range narrower than the first range.

In some embodiments, the method further includes computing the second set of BSFC type data on-vehicle based parameters retrieved via an on-vehicle controller area network interface during over-the-road operation of the vehicle.

In some cases or embodiments, the controller area network interface includes a J1939 interface by which the electric drive controller is coupled to an engine control module of the fuel-fed engine. In some cases or embodiments, the parameters retrieved during over-the-road operation include one or more of load, fuel usage and engine rpm, and the computing refines, based on actual observations of the retrieved parameters, a BSFC type data set to converge upon the second set of BSFC type data.

In some embodiments, the method further includes retrieving the second set of BSFC type data from an off-vehicle information store based on a signature retrieved via an on-vehicle controller area network interface, the retrieved signature indicative of the fuel-fed engine.

In some cases or embodiments, the vehicle includes a trailer portion having the electric drive axle and wherein the trailer portion is initially coupled to a first tractor unit that provides the fuel-fed engine and the primary drivetrain, and the method further includes: (i) prior to the adapting of the ECMS, and after decoupling from the first tractor unit, coupling to a second tractor unit that provides a second fuel-fed engine different from the fuel-fed engine; and (ii) retrieving the second set of BSFC type data from an off-vehicle information store based on a signature retrieved via an on-vehicle controller area network interface, the retrieved signature indicative of the second fuel-fed engine.

In some cases or embodiments, the first and second sets of BSFC type data both characterize efficiency of the fuel-fed engine. In some cases or embodiments, the first, the second and successive further sets of BSFC type data each characterize efficiency of particular fuel-fed engines or classes thereof with which the electric drive axle is paired in successive through-the-road (TTR) hybrid configurations.

In some embodiments, the method further includes retrieving, via a radio frequency data communication interface, at least the second set of BSFC type data from an off-vehicle, network-connected service platform an information store that hosts an information store of BSFC type data for particular fuel-fed engines or classes thereof. In some cases or embodiments, the retrieving is based on a signature indicative of a particular fuel-fed engine or class thereof with which the electric drive axle is paired in a particular through-the-road (TTR) hybrid configuration.

As provided in appended claim 6, a system includes a vehicle having an electric drive axle configured to supplement, in a through-the-road (TTR) hybrid configuration, motive torque provided by a fuel-fed engine through a primary drivetrain; and an electric drive controller for the electric drive axle configured to apply an equivalent consumption minimization strategy (ECMS) using a first set of brake-specific fuel consumption (BSFC) type data based on a plurality of fuel-fed engines to characterize efficiency of the fuel-fed engine and to adapt the application of the ECMS based on a second set of BSFC type data based on a signature of the particular fuel-fed engine and thereafter continue to supply supplemental torque during over-the-road travel using the electric drive axle under control of the electric drive controller with the adapted ECMS applied. In some cases or embodiments, the electric drive controller is not directly responsive to controls of the fuel-fed engine and primary drivetrain, but instead controls motive torque supplied by the electric drive axle using the first and adapted second sets of BSFC type data to characterize efficiency of the fuel-fed engine with which the electric drive axle is paired in the through-the-road (TTR) hybrid configuration. In some cases or embodiments, the vehicle includes a tractor unit having the fuel-fed engine, the primary drivetrain, the electric drive axle and the electric drive controller therefor.

In some embodiments, the system further includes a trailer portion mechanically coupled to the tractor unit. In some embodiments, the system further includes the trailer portion having an additional electric drive axle coupled to the electric drive controller.

In some cases or embodiments, the vehicle includes a tractor unit having the fuel-fed engine and the primary drivetrain, and the vehicle further includes a trailer portion having the electric drive axle and the electric drive controller therefor.

In some embodiments, the system further includes a network-connected service platform; and a radio frequency data communication interface by which the electric drive controller retrieves one or more of the first and second sets of BSFC type data from the network-connected service platform.

In some cases or embodiments, the retrieval of either or both of the first and second sets of BSFC type data is responsive to recognition of fuel-fed engine signature after coupling to a controller area network interface. In some cases or embodiments, the retrieval of either or both of the first and second sets of BSFC type data is responsive to a command received over the radio frequency data communication interface. In some cases or embodiments, for at least some fuel-fed engine signatures recognized after coupling to a controller area network interface, the retrieval of BSFC type data is from a portion of an information store hosted locally on the vehicle. In some cases or embodiments, the locally hosted portion of the information store is updated with BSFC type data retrieved via the network-connected service platform periodically, on-demand, or in response to a command received over the radio frequency data communication interface.

### BRIEF DESCRIPTION OF THE DRAWINGS

In the accompanying figures, like references generally indicate similar elements or features.
**FIG. 1A** is functional block diagram illustrating hybridizing control of both on-trailer and on-tractor electric drive axles based on brake specific fuel consumption (BSFC) type data retrieved for a particular fuel-fed engine with which each is paired. Embodiments may include hybridizing assemblies in either or both locations.

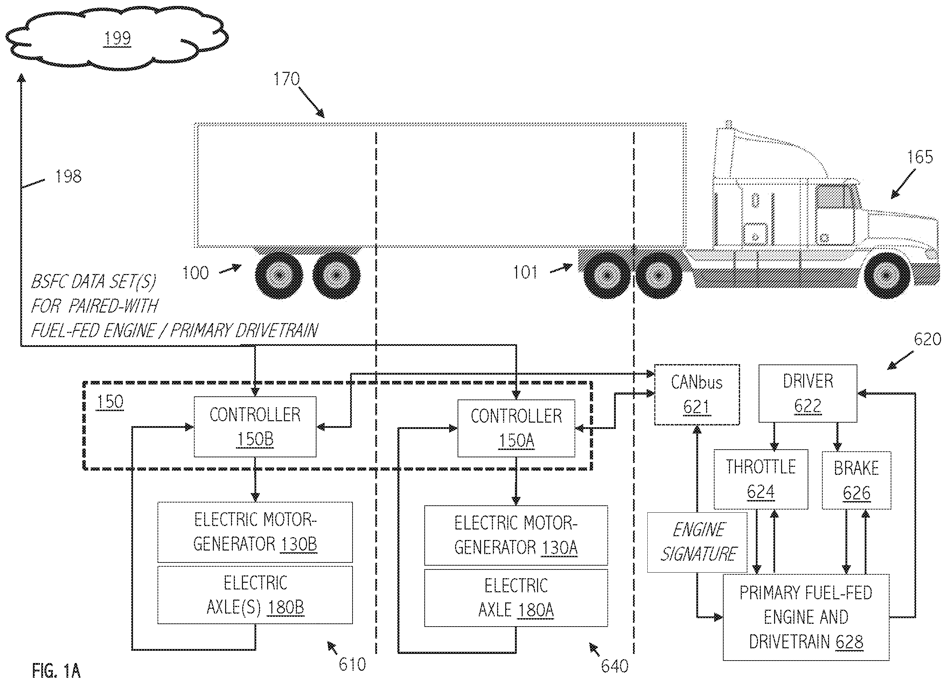

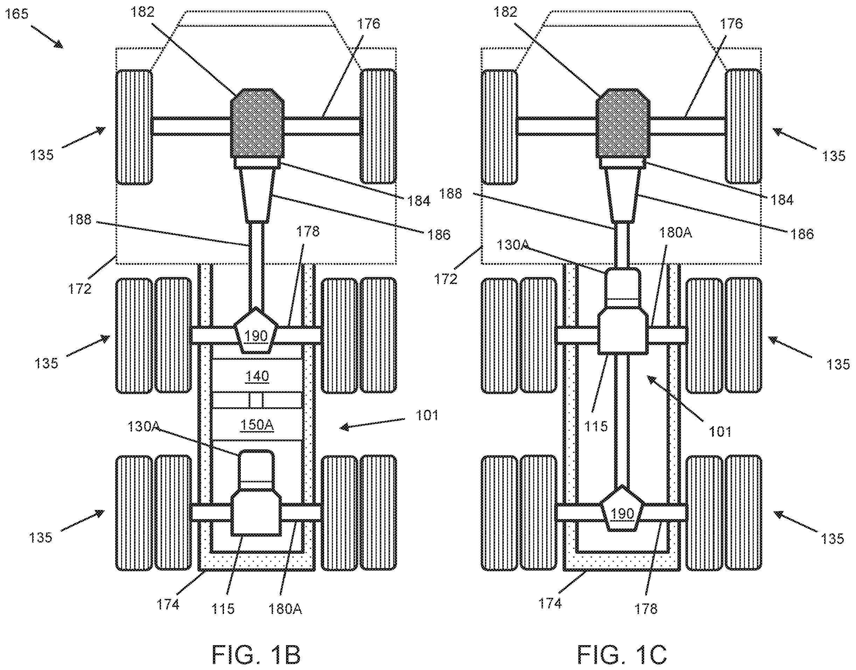

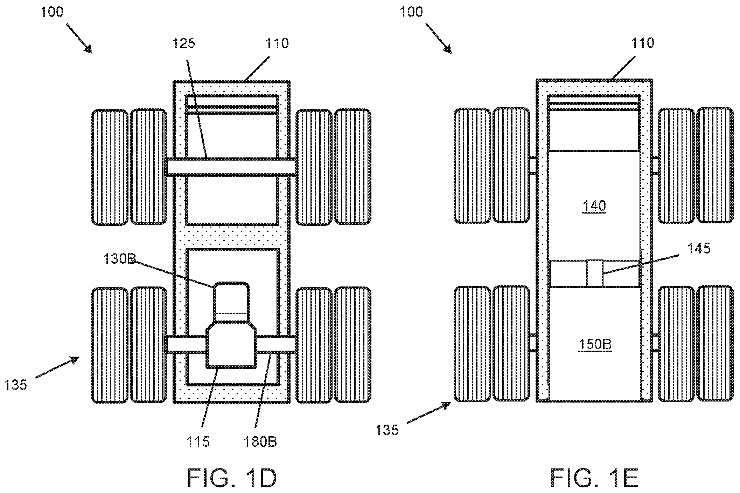

**FIGs. 1B, 1C****,** **1D,** and **1E** are depictions of various hybridizing assembly configurations consistent with the illustration of **FIG. 1A****.** **FIGs. 1C** and **1B** depict tractor unit configurations with fore- and aft-positioned electric drive axles paired on the tractor unit in a through-the-road (TTR) hybrid configuration with fuel-fed engine and primary drivetrain. **FIGs. 1D** and **1E** depict bottom and top views of an exemplary hybridizing suspension assembly (e.g., for a trailer) including an electric drive axle suitable for pairing in a tractor-trailer vehicle configuration in a through-the-road (TTR) hybrid configuration with the fuel-fed engine and primary drivetrain of a tractor unit.
**FIG. 2** illustrates components and selected interfaces of an electric drive controller.
**FIG. 3** illustrates an exemplary computational flow for components of an electric drive controller.
**FIG. 4** illustrates an exemplary computational flow for adaptation of brake-specific fuel consumption type data based on operational data acquired on vehicle.
**FIGs. 5A** and **5B** illustrate telematics systems and communication interfaces.

Skilled artisans will appreciate that elements or features in the figures are illustrated for simplicity and clarity and have not necessarily been drawn to scale. For example, the dimensions or prominence of some of the illustrated elements or features may be exaggerated relative to other elements or features in an effort to help to improve understanding of certain embodiments.

### DETAILED DESCRIPTION

The present application describes a variety of embodiments, or examples, for implementing different features of the provided subject matter. Specific examples of components and arrangements are described below. These are, of course, merely examples and are not intended to be limiting. In addition, the following may repeat reference numerals and/or letters in the various examples. This repetition is for purposes of simplicity and clarity and does not in itself dictate an identity relationship between the various embodiments and/or configurations discussed.

More specifically, the present application describes designs and techniques for providing an energy management system and related methods in the context of system and components typical in the heavy trucking industry. Some embodiments provide a hybridizing assembly (e.g., an electrically driven axle, power source, electric drive controller, etc. that may be integrated with suspension components) affixed (or suitable for affixing) underneath a vehicle (e.g., a truck, tractor unit, trailer, tractor-trailer or tandem configuration, etc.) as a replacement to a passive axle or suspension assembly. In various non-limiting example configurations, a hybridizing assembly (or components thereof) may be included as part of a fuel-consuming tractor unit or tandem. In additional non-limiting example configurations, a hybridizing assembly can (alternatively or additionally) be part of a trailer that may be towed by a powered vehicle, such as a fuel-consuming tractor unit. Configurations of **FIG. 1A-1E** are illustrative, though not exhaustive.

As described in more detail below, a hybridizing assembly is but one realization in which an electrically driven axle operates largely independently of the fuel-fed engine and primary drivetrain of a powered vehicle and is configured to operate in a power assist, regeneration, and passive modes to supplement motive/braking forces and torques applied by the primary drivetrain and/or in braking. In general, one or more electrically driven axles may supplement motive/braking forces and torques under control of a controller (or controllers) that does not itself (or do not themselves) control fuel-fed engine and primary drivetrain. Instead, control strategy implemented by an electric drive controller seeks to follow and supplement the motive inputs of the fuel-fed engine and primary drivetrain using operating parameters that are observable (e.g., via CANbus or SAE J1939 type interfaces), kinematics that are sensed and/or states that may be computationally estimated based on either or both of the foregoing. In some embodiments, based on such observed, sensed or estimated parameters or states, the electric drive controller applies an equivalent consumption minimization strategy (EGMS) or adaptive ECMS type control strategy to modulate the motive force or torque provided, at the electrically driven axle(s), as a supplement to that independently applied using the fuel-fed engine and primary drivetrain of the powered vehicle.

By supplementing the fuel-fed engine and primary drivetrain of the powered vehicle, some embodiments seek to simultaneously optimize fuel consumption of the powered vehicle, energy consumption of the hybrid suspension assembly, and/or state of charge (SOC) of on-board batteries or other energy stores. In some cases, such as during stopovers, the fuel-fed engine may shut down rather than idle. In some cases, energy consumption management strategies may take into account a desired SOC at scheduled, mandated or predicted stopovers. Among other advantages, embodiments disclosed herein may provide for a significant reduction in fuel consumption (e.g., an average of about 30%), a built-in auxiliary power unit (APU), enhanced stability control, improved trailer dynamics, and a host of other benefits, at least some of which are described in more detail below.

**FIG. 1A** is an exemplary functional block diagram illustrating control of both on-trailer (**100**) and on-tractor (**101**) electric drive axles based on brake specific fuel consumption (BSFC) type data retrieved (**198**) for a particular fuel-fed engine and primary drivetrain **628** with which each is paired. In the configuration of **FIG. 1A****,** a vehicle comprising both a tractor unit **165** and a trailer **170** is shown. The hybrid system allows controllers for either or both of the illustrated electric drive axles (**180A, 180B**) to apply a through-the-road (TTR) hybridization strategy using control algorithms that implement an equivalent consumption minimization strategy (ECMS), an adaptive ECMS or similar strategy based on a characterization of efficiency at varying loads and operating points for the specific fuel-fed engine (**628**) with which they are paired. Although **FIG. 1A** illustrates one or more electric drive axles on-trailer (**180B**) and an electric drive axle on-tractor (**180A**), alternative configurations may employ just one or the other. In embodiments that provide electric drive axles in both locations, e.g., as electric drive axles **180A, 180B,** corresponding drive controllers may be implemented separately, e.g., as electric drive controllers **150A, 150B,** or integrated as a single controller, represented here as electric drive controller **150.**

Integration is a generally a matter of design choice. For purposes of clarity, the present description refers to related instances of an electric drive controller, an electric motor generator and electric axle(s) (e.g., **150A/130A/180A** or **150B/130B/180B**) using suffixes (A or B) where necessary or helpful to distinguish, however similar components may be referenced or described in shorthand without suffixes and without loss of descriptiveness if/when the particular instance of electric drive controller, an electric motor generator and/or electric axle(s) does not significantly affect the description.

Multiple control loops are illustrated in **FIG. 1A****.** The first is a generally conventional control loop **620** illustrated relative to a tractor unit **165** having a fuel-fed engine and drivetrain (**628**) that supplies primary motive torque, while the second (electric drive control loop **640**) and/or third (electric drive control loop **610**) loops control supplemental torques applied at respective electric drive axles (**186A, 180B**). The first control loop (**620**) will be understood inasmuch as a driver **622** interacts with throttle (**624**), braking (**626**) and other controls (such as gear shift controls, not specifically shown) to cause the vehicle (here tractor unit **165** and its mechanically coupled trailer **170**) to accelerate and decelerate during over-the-road travel. In general, persons of skill in the art will understand control loop **620** to be representative of the various inputs, settings, microcontrollers, algorithms, control actions, feedback controls, etc. that may exercise control over primary fuel-fed engine and drivetrain **628**. In general, the vehicle (and here in a tractor-trailer configuration, tractor unit **165**) may utilize as its fuel-fed engine any of a variety of engine technologies and fuel types such as diesel, gasoline, propane, biodiesel, ethanol (E85), compressed natural gas (CNG), hydrogen internal combustion engine (ICE), homogeneous charge compression ignition (HCCI) engine, hydrogen fuel cell, hybrid electric, plug-in hybrid, diesel- or turbine-electric engines, and/or other type(s) of fuel/technology.

Turning then to the supplemental electric drive axles and their associated control loops **(640, 610,** or both **640** and **610**), in the illustrated embodiments, supplemental motive torque(s) is (are) supplied using one or more electric motor-generators and associated drive axles **130A/130B/130, 180A/180B/180** under control of respective controllers **150A/150B** or a combined controller (156). Each of these supplemental electric drive axles and their associated control loops is configured to operate largely independently of the fuel-fed engine and primary drivetrain of a powered vehicle and, in some cases, autonomously from the engine and drivetrain controls of the powered vehicle.

As used herein, "autonomous " operation is terminology used to describe an ability of the hybridizing system (**101, 100**) to operate in a manner that is not directly responsive to throttle, gearing and other controls of loop **620** on the tractor unit **165,** and instead to independently gain information about itself, the primary fuel-fed engine and drivetrain **628** and the environment, and to make decisions and/or perform various functions based on one or more algorithms stored in its own controller (**150A/150B/150**), as described in more detail below. In some embodiments, "autonomous" operation does not preclude observation or estimation of certain parameters or states of a powered vehicle's fuel-fed engine or primary drivetrain (e.g., via CANbus **621** or otherwise); however, electrically driven axles (**180A/180B/180**) are not directly controlled by an engine control module (ECM) of the powered vehicle and, even where ECIV!S or adaptive ECIVIS-type control strategies are employed, no single controller manages control inputs to both the supplemental electrically driven axle(s) and the primary fuel-fed engine and drivetrain.

In an effort to identify this form or arrangement, the term through-the-road (TTR) hybrid system is employed and meant to convey a range of embodiments in which some or all components of a supplemental electrically-driven axle, often (though not necessarily) including a controller, a power source, brake line sensors, CANbus or SAE J1939 type interfaces, sensor packages, off-vehicle radio frequency (RF) communications and/or geopositioning interfaces, etc. are arranged as a tandem or are integrable with components that are driven by the fuel fed engine and primary drivetrain to which the electrically driven axle acts as a supplement. The through-the-road (TTR) character is meant to emphasize that while electrically-driven and conventionally powered (e.g., by a fuel-fed engine and primary drivetrain) axles may be collocated, arranged as a tandem or otherwise integrated (or integrable) in assembly, they would not be understood to involve a combined drivetrain or transmission that blends the motive inputs of an electrical motor and a fuel-fed engine. Either or of both of hybridizing assemblies **101** and **100** will be understood to be operable, in conjunction with the primary fuel-fed engine and drivetrain **628,** as a TTR hybrid system.

In some though not all embodiments, a TTR hybrid system can take on the form or character commonly understood with reference to a configuration referred to the US trucking industry as a 6x2, but in which an otherwise dead axle is instead powered using an electrically-driven axle (**180A**) and controller for coordinating its supplementation of primary motive force or torques provided by a primary drivetrain and fuel-fed engine. Here too, the tractor-trailer configuration illustrated in **FIG. 1A** is exemplary and will be understood to include a TTR hybrid system (**101**)**.** Again, the tractor-trailer configuration is exemplary, and notwithstanding the ability of the trailer (**170**) to be decoupled from tractor units (e.g., tractor unit **165**) that provide a TTR hybrid system, vehicles such as a heavy truck having a single frame or operable as or with tandem trailers (not specifically shown in **FIG. 1A**) will be understood to be amenable to inclusion of a TTR hybrid system.

In some embodiments, techniques are employed to recognize a primary fuel-fed engine (e.g., **628**) with which an electrically-powered drive axle (e.g., **180A/180B/180**) is paired and to adapt through-the-road (TTR) control strategies applied at the electrically-powered drive axle to characteristics of the particular, paired-with, fuel-fed engine. In some embodiments, a communication interface is used for retrieval (**198**), e.g., from a cloud-based telematics system service platform **199,** of brake-specific fuel consumption (BSFC) data or the like for a recognized and paired-with fuel-fed engine. While the ability to adapt control strategies applied at the electrically-powered drive axle to the paired-with fuel-fed engine can be particularly advantageous in tractor-trailer configurations where an electrically-powered drive axle (e.g., on a trailer) is paired with an ever changing set of fuel-fed engines (e.g., on tractor), other configurations may also benefit. For example, even in fixed pairings (such as on a unitary vehicle or tractor configured with a 6x2 primary drivetrain and supplemental electric drive axle), the ability to retrieve BSFC type data for a particular, fuel-fed engine and adapt TTR control strategies applied at the electrically-powered drive axle facilitates applications where direct integration with engine controls is difficult, undesirable or ill-advised. In addition, in some embodiments, over-the-air (OTA) updates may be employed to adapt TTR control strategies based on crowdsourced insights for a particular engine/drive train configuration and/or in a manner particular to regional, route, terrain, climatic, weather, vehicle load or other factors.

In general, TTR designs using control strategies such as an equivalent consumption minimization strategy (ECMS) or an adaptive EGMS are contemplated and implemented at the supplemental torque delivering electrically-powered drive axle (or axles) in a manner that follows operational parameters or computationally estimates states of the primary drivetrain and/or fuel-fed engine, but does not itself participate in control of the fuel-fed engine or primary drivetrain. Although BSFC type data generic to a range of fuel-fed engines can be employed (at least initially), BSFC type data particular to the paired-with fuel-fed engine allows an ECMS implementation (or other similar control strategies) to adapt to efficiency curves for the particular fuel-fed engine and to improve overall efficiencies of the particular TTR hybrid configuration.

In various of the described embodiments, an ECMS-type controller (e.g., electric drive controller **150A/150B/150**) for electrically-powered drive axle is not directly responsive to driver-, autopilot- or cruise-type throttle controls of the fuel-fed engine or gear selections by a driver or autopilot in the primary drivetrain. Instead, the controller is responsive to sensed pressure in a brake line for regenerative braking and to computationally-estimated operational states of the fuel-fed engine or of the drive train. In some cases, recognition of a particular fuel-fed engine and observables employed by the controller include information retrieved via a CANbus or SAE J1939 vehicle bus interface **621** such as commonly employed in heavy-duty trucks. While the ECMS-type controller employed for the electrically-powered drive axle (or axles) **180A/180B/180** adapts to the particular character and current operation of the fuel-fed engine and primary drivetrain **628** (e.g., apparent throttle and gearing), it does not itself control the fuel-fed engine or of the primary drivetrain.

### TTR Hybrid System on Tractor Unit

In some embodiments, one or more aspects of the hybridizing system explained above may be adapted for use as part of tractor unit **165.** With reference to **FIGs. 1A****,** 1**B and 1C,** such an adapted through the road (TTR) hybrid system 1**01** may include various elements described above, which are coupled to and/or integrated with existing components of tractor unit **165.** In some examples, the TTR hybrid system **101** may provide for replacement of the one or more passive axles of the tractor unit **165** with one or more powered axles. Thus, in various embodiments, TTR hybrid system **101** may be used to provide a motive rotational force (e.g., in a first mode, or power assist mode, of operation) to a powered towing vehicle (e.g., to tractor unit **165**)**.** Additionally, in some embodiments, TTR hybrid system **101** is configured to provide a regenerative braking force (e.g., in a second mode, or regeneration mode, of operation) that charges an energy storage system (e.g., the battery array). In some examples, TTR hybrid system **101** is further configured to provide neither motive rotational nor regenerative braking force (e.g., in a third mode, or passive mode, of operation).

It is noted that TTR hybrid system **101** may, in some embodiments, be used separately and independently from hybridizing system **100** attached to the trailer. Thus, for example, advantages of the various embodiments disclosed herein (e.g., reduced fuel consumption and emissions, improved fuel efficiency, vehicle acceleration, vehicle stability, and energy recapture) may be realized by TTR hybrid system **101** apart from hybrid system system **100.** This may be advantageous, for instance, when tractor unit **165** is driven without the attached trailer. To be sure, when tractor unit **165** is used to tow a trailer, and in some embodiments, hybridizing system **100** may be used with TTR hybrid system **101** in a cooperative TTR configuration operated to provide a greater motive rotational force to, or recapture a greater amount of energy from, tractor-trailer vehicle **160** than either of hybridizing systems **100** and **101** would be able to provide or recapture on their own.

With reference to **FIG. 1B****,** illustrated therein is a bottom view of TTR hybrid system **101** coupled to and/or integrated with tractor unit **165.** As shown, the tractor unit **165** may include a cab **172,** a frame **174,** a steering axle **176,** an engine-powered axle **178,** an electric axle **180A,** and wheels/tires **135** coupled to ends of each of the steering axle **176,** the engine-powered axle **178,** and the electric axle **180A.** A steering wheel may be coupled to steering axle **176** to turn and/or otherwise control a direction of travel of tractor unit **165.** In various embodiments, tractor unit **165** further includes an engine **182,** a torque converter **184** coupled to engine **182,** a transmission **186** coupled to the torque converter **184,** a drive shaft **188** coupled to the transmission **186,** and a differential **190** coupled to the drive shaft **188.** Differential **190** may be further coupled to the engine-powered axle **178,** thereby providing torque to the wheels coupled to ends of the engine-powered axle **178.** As part of the TTR hybrid system **101,** and in various embodiments, electric motor-generator **130A** may be coupled to electric axle **180A** by way of a differential **115,** thereby allowing electric motor-generator **130A** to provide the motive rotational force in the first mode of operation, and to charge the energy storage system (e.g., the battery array) by regenerative braking in the second mode of operation. In some embodiments, electric axle **180A** may include multiple electric-motor generators coupled thereto.

As shown in **FIG. 1B****,** TTR hybrid system **101** may also include a battery array **140** and control system **150A/150,** for example, coupled to each other by an electrical coupling, thereby providing for energy transfer between battery array **140** and electric motor-generator **130A.** The battery array **140** may include any of a variety of battery types.

Referring to **FIG. 1C****,** illustrated therein is a bottom view of an alternative embodiment of TTR hybrid system **101** coupled to and/or integrated with tractor unit **165.** In the example of **FIG. 1B****,** engine-powered axle **178** is disposed between steering axle **176** and electric axle **180A,** which is disposed at a back end (e.g., opposite cab **172**) of tractor unit **165.** Alternatively, in the example of **FIG. 1C****,** electric axle **180A** is disposed between steering axle **176** and engine-powered axle **178,** which is disposed at a back end (e.g., opposite the cab **172**) of tractor unit **165.** While not explicitly shown in **FIG. 1C** for clarity of illustration, TTR hybrid system **101** provided therein may also include battery array **146** and control system **150A/150,** as described above.

Generally, TTR hybrid system **101** may include a battery, a motor controller, a cooling system, an APU, low voltage controls, GPS/LTE receivers, a motor and gearbox, and a truck CAN bus interface. While not explicitly shown in the drawings, TTR hybrid system **101** of **FIGs, 1A****,** **1****B** and **1C** may further include other features described herein such as additional controllers, brake line sensors, SAE J 1939 type interfaces, sensor packages, off-vehicle mobile, radio frequency (RF) communications, etc.

Although TTR hybrid system configurations are described in the context of a tractor unit suitable for use in a tractor-trailer configuration, configurations in which powered vehicles, including heavy trucks with a single effective frame, include the systems methods and/or techniques described herein relative to tractor unit, trailer, tractor-trailer and/or tandem configurations.

### TTR Hybrid System with Trailer

Referring now to **FIG. 1D****,** the hybridizing system **100** previously illustrated in **FIG. 1A****,** may include a frame **110,** a suspension, one or more drive axles (e.g., such as a drive axle **180B**), at least one electric motor-generator (e.g., such as an electric-motor generator **130B**) coupled to the at least one or more drive axles, an energy storage system (e.g., such as battery array **140**), and a controller (e.g., such as electric drive controller **150B**). In accordance with at least some embodiments, the hybridizing system **100** is configured for attachment beneath a trailer (recall trailer **170,** **FIG. 1A**). As used herein, the term "trailer" is used to refer to an unpowered vehicle towed by a powered vehicle. In some cases, the trailer may include a semi-trailer coupled to and towed by a truck or tractor (e.g., a powered towing vehicle) such as tractor unit **165,** previously described.

To be sure, embodiments may equally be applied to other types of trailers (e.g., utility trailer, boat trailer, travel trailer, livestock trailer, bicycle trailer, motorcycle trailer, a gooseneck trailer, flat trailer, tank trailer, farm trailer, or other type of unpowered trailer) towed by other types of powered towing vehicles (e.g., pickup trucks, automobiles, motorcycles, bicycles, buses, or other type of powered vehicle).

As before, the hybridizing system **100** is configured to operate largely independently of the fuel-fed engine and primary drivetrain of a powered vehicle and, in some cases, autonomously such that it operates in a manner that is not directly responsive to throttle, gearing and other engine and drivetrain controls of the powered vehicle. Instead, hybridizing system **100** independently gains information about itself, the primary fuel-fed engine and drivetrain of a towing vehicle and the environment, and makes decisions and/or perform various functions based on one or more algorithms stored in its own controller (**150B/150**), as described in more detail below. In some embodiments, "autonomous" operation does not preclude observation or estimation of certain parameters or states of a powered vehicle's fuel-fed engine or primary drivetrain (e.g., via CANbus interface or otherwise); however, electrically driven axles (**180B/180**) are not directly controlled by an engine control module (ECM) of the powered vehicle and, even where EGMS or adaptive ECMS-type control strategies are employed, no single controller manages control inputs to both the supplemental electrically driven axle(s) and the primary fuel-fed engine and drivetrain.

In accordance with some embodiments, hybridizing system **100** can be configured to provide, in a first mode of operation, a motive rotational force (e.g., by an electric motor-generator coupled to a drive axle) to propel the trailer under which is attached, thereby providing an assistive motive force to the powered towing vehicle. Thus, in some examples, a first mode of operation may be referred to as a "power assist mode." Additionally, in some embodiments, hybridizing system **100** is configured to provide, in a second mode of operation, a regenerative braking force (e.g., by the electric motor-generator coupled to the drive axle) that charges an energy storage system (e.g., battery array **140**). Thus, in some examples, the second mode of operation may be referred to as a "regeneration mode." In some examples, hybridizing system **100** is further configured to provide, in a third mode of operation, neither motive rotational nor regenerative braking force such that the trailer and the attached hybridizing system **100** are solely propelled by the powered towing vehicle to which the trailer is coupled. Thus, in some examples, the third mode of operation may be referred to as a "passive mode."

In providing powered axle(s) to the trailer (e.g., by the hybridizing system **100**), embodiments result in a significant reduction in both fuel consumption and any associated vehicle emissions, and thus a concurrent improvement in fuel efficiency, of the powered towing vehicle. In addition, various embodiments may provide for improved vehicle acceleration, vehicle stability, and energy recapture (e.g., via regenerative braking) that may be used for a variety of different purposes. For example, embodiments may use the recaptured energy to apply the motive rotational force using the electric motor-generator and/or provide on-trailer power that may be used for powering a lift gate, a refrigeration unit, a heating ventilation and air conditioning (HVAC) system, pumps, lighting, communications systems, and/or providing an auxiliary power unit (APU), among others. It is noted that the above advantages and applications are merely exemplary, and additional advantages and applications will be apparent to those skilled in the art.

Referring again to **FIG. 1D****,** illustrated therein is a bottom view of an exemplary hybridizing system **100** which shows frame **110,** drive axle **180B,** a passive axle **125,** and wheels/tires **135** coupled to ends of each of the drive axle **180B** and the passive axle **125.** In some embodiments, electric motor-generator **130B** is coupled to electric drive axle **180B** by way of a differential **115,** thereby allowing electric motor generator **130B** to provide the motive rotational force in the first mode of operation, and to charge the energy storage system (e.g., battery array **140**) by regenerative braking in the second mode of operation. Note that in some embodiments, components such as the electric motor generator, gearing and any differential may be more or less integrally defined, e.g., within a single assembly or as a collection of mechanically coupled components, to provide an electrically-driven axle.

While shown as having one drive axle and one passive axle, in some embodiments, hybridizing system **100** may have any number of axles, two or more drive axles, as well as multiple electric-motor generators on each drive axle. In addition, axles of the hybridizing system (e.g., drive axle **180B** and passive axle **125**) may be coupled to frame **110** by a leaf spring suspension, an air suspension, a fixed suspension, a sliding suspension, or other appropriate suspension. In some embodiments, the wheels/tires **135** coupled to ends of one or both of the drive axle **180B** and the passive axle **125** may be further coupled to a steering system (e.g., such as a manual or power steering system), thereby providing for steering of hybridizing system **100** in a desired direction.

With reference to **FIG. 1E****,** illustrated therein is a top view of hybridizing system **100** showing battery array **140** and electric drive controller **150B/150.** In various embodiments, battery array **140** and controller **150B/150** may be coupled to each other by an electrical coupling **145.** In addition, electric motor-generator **130B** may be coupled to controller **150B/150** and to battery array **140,** thereby providing for energy transfer between battery array **140** and electric motor-generator **130B.** In various examples, the battery array **140** may include one or more of an energy dense battery and a power dense battery. For example, in some embodiments, battery array **140** may include one or more of a nickel metal hydride (NiMH) battery, a lithium ion (Li-ion) battery, a lithium titanium oxide (LTO) battery, a nickel manganese cobalt (NMC) battery, a supercapacitor, a lead-acid battery, or other type of energy dense and/or power dense battery.

### Control System Architecture and Components

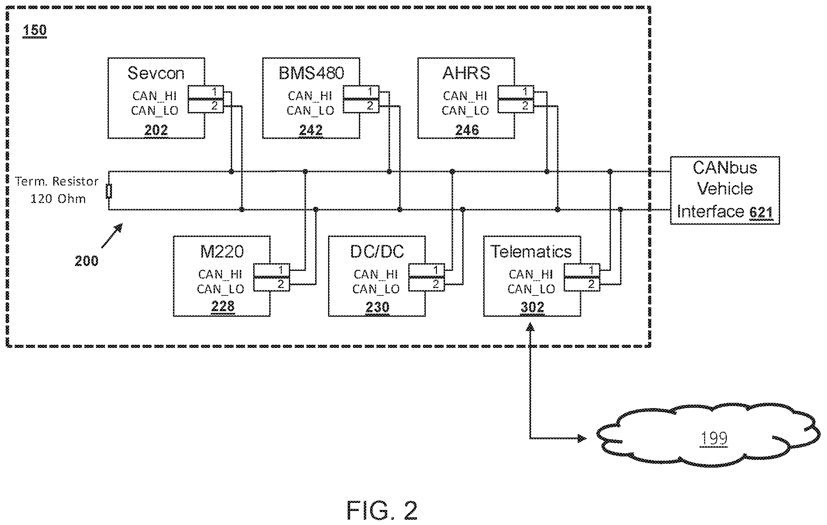

With reference now to **FIG. 2****,** illustrated therein is an embodiment of electric drive controller **150A/150B/150,** including controller area network (CANbus) **200** used for communication of the various components of electric drive controller **150B/150** with one another and with external components such as cloud-based telematics system service platform **199** and a CANbus vehicle interface **621** of tractor unit **165** (recall **FIG. 1A**). Note that architecture and operation of the electric drive controller is generally similar whether a particular instance thereof is deployed as electric drive controller **150A, 150B,** or **150** (recall **FIGs. 1A-1E**).

Generally, a CANbus is a vehicle bus standard designed to allow microcontrollers and other devices such as electronic control units (ECUs), sensors, actuators, and other electronic components, to communicate with each other in applications without a host computer. In various embodiments, CANbus communications operate according to a message-based protocol. Additionally, CANbus communications provide a multi-master serial bus standard for connecting the various electronic components (e.g., ECUs, sensors, actuators, etc.), where each of the electronic components may be referred to as a 'node'. In various cases, a CANbus node may range in complexity, for example from a simple input/output (I/O) device, sensors, actuators, up to an embedded computer with a CANbus interface. In addition, in some embodiments, a CANbus node may be a gateway, for example, that allows a computer to communicate over a USB or Ethernet port to the various electronic components on the CAN network.

In some embodiments, CANbus **200** includes an ISO 11898-2 high speed CAN bus (e.g., up to 1 Mb/s). By way of example, CANbus **200** is shown as including as nodes, for example, an AC motor controller **202,** battery management system (BMS) **242,** AHRS **246** (sensor), a master control unit **228,** DC-DC power supply **230** (actuator), and telematics unit **302** (smart sensor). In some embodiments, the telematics unit **302** may include a global positioning system (GPS), an automatic vehicle location (AVL) system, a mobile resource management (MRM) system, a wireless communications system providing data communications with cloud-based telematics system service platform **199,** a radio frequency identification (RFID) system, a cellular communications system, and/or other telematics systems. In some embodiments, telematics unit **302** may also include the AHRS **246.** CANbus or SAE J1939 interfaces may be provided to other systems, such as interface **621** of a powered vehicle to facilitate read-type access to operating parameters or otherwise observable states of systems thereof.

### Control Methods, Generally

Various aspects of the hybridizing system **100** and the TTR hybrid system **101** have been described above, including aspects of the control system architecture and related components. It has been noted that the hybridizing system **100** and the TTR hybrid system **101** are operated, by way of electric drive controllers **150A, 150B, 150** and suitable program code, in at least three modes of operation: (i) a power assist mode, (ii) a regeneration mode, and (iii) a passive mode. In at least some embodiments, the program code used to operate controllers **150A, 150B, 150** may reside on a memory storage device within the master control unit **228.** In addition, the master control unit **228** may include a microprocessor and/or microcontroller operable to execute one or more sequences of instructions contained in the memory storage device, for example, to perform the various methods described herein. In some cases, one or more of the memory storage, microprocessor, and/or microcontroller may reside elsewhere within hybridizing system **100,** within TTR hybrid system **101** or even at a remote location that is in communication with the hybridizing system **100** or TTR hybrid system **101.**

Referring to **FIG. 2****,** a variety of control systems designs are contemplated. For example, in some embodiments, electric drive controllers **150A, 150B, 150** are programmed to apply an equivalent consumption minimization strategy (ECMS) or adaptive ECMS type control strategy to modulate the motive force or torque provided, at an electrically driven axle(s), as a supplement to motive force or torques that electric drive controllers **150A, 150B, 150** estimate are independently applied using the fuel-fed engine and primary drivetrain of the powered vehicle.

It will be appreciated that different fuel-fed engines produce different amounts of power based on the fuel supplied to them at different engine rpms. To optimize the usage of a parallel TTR hybrid, such as the system(s) illustrated in **FIG. 1A****,** electric drive controllers **150A, 150B, 150** need to apply a specific amount of assistive propulsion to save the most amount of fuel over time. BSFC type data is one way of characterizing, for a given fuel-fed engine with which it is paired, efficiency as a function of engine speed (RPM) and torque. The BSFC curves of different diesel engines are similar enough to one another that we can apply a generic ECMS algorithm to target the generally more efficient engine operating zones, but the system will not achieve optimal efficiency based on the specific engine with which the electric drive axle(s) is (are) paired.

Accordingly, in some embodiments, BSFC type data is generated or obtained for the specific paired-with fuel fed engine. In some embodiments, BSFC type data is generated (learned) on-vehicle and optionally supplied through off-vehicle communications to other vehicles and their controllers. In some embodiments, BSFC type data is retrieved or supplied via such off-vehicle communications. In general, such off-vehicle communications may be via terrestrial mobile data networks (2G/3G/LTE/5G), via overhead satellites, via networks interfaces through IEEE 802.1 1 or Wi-Fi access points or using other radio frequency communication facilities now or hereafter deployed in transportation. In the illustrated embodiment(s), an interface (**621**) with an engine control module (ECM) via a CANbus provides a convenient way of retrieving and identifying a signature for the particular, paired-with, fuel-fed engine. Likewise, in some embodiment(s), such an interface facilitates access to instantaneous (or near instantaneous) measures of engine load, fuel usage and engine RPMs, which can be used to converge an initial set of BSFC data on values that more particularly characterize the paired-with, fuel-fed engine.

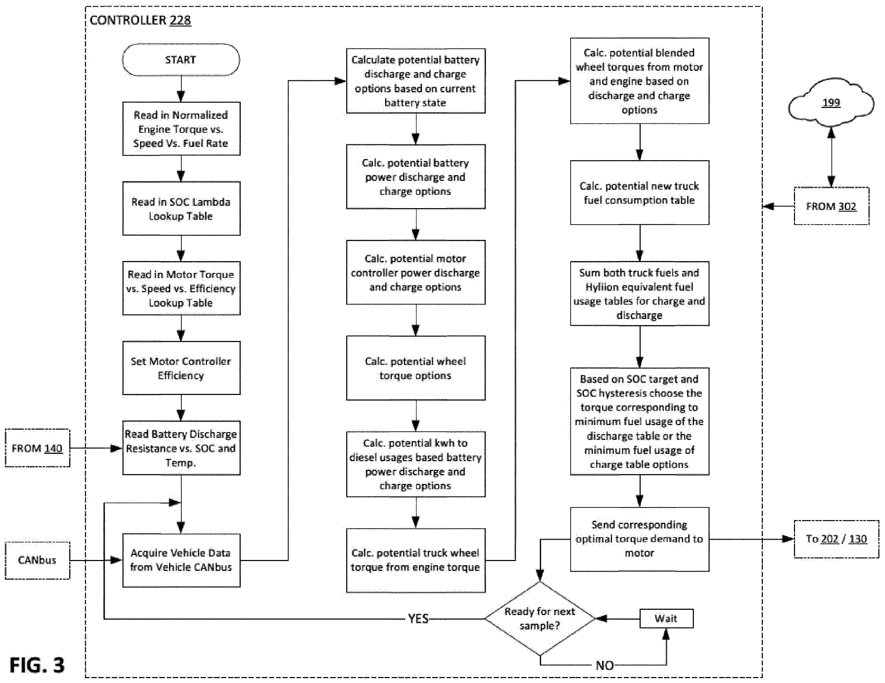

**FIG. 3** is a flow diagram that illustrates computations of a controller that applies an equivalent consumption minimization strategy (ECMS) to the hybridizing system **100** or TTR hybrid system **101** designs previously explained. Interactions of a programmed controller **228** with battery array **140,** with a vehicle CANbus (for retrieval of operating conditions indicative of current torque delivered by fuel-fed engine through the primary drive train and current gear ratios of that primary drivetrain), and ultimately with electric motor-generator **130A/130B** via any local controller (e.g., sevcon controller **202**) are all illustrated. Likewise, retrieval of particular (or even crowdsourced) BSFC type data via off-vehicle communications is illustrated via telematics unit **302** and cloud-based telematics system service platform **199.**

Referring to **FIG. 3****,** based on the current SOC for battery array **140,** an array of possible options for amperage discharge and charge values are calculated. These possibilities are converted to kW power as potential battery power discharge and charge possibilities. Battery inefficiencies and motor controller inefficiencies are considered along with possible electric drivetrain gear ratios to arrive at the corresponding potential electric motor torques that can be applied and resultant wheel torques which can be applied to the vehicle using electric motor-generator **130A/130B.** Using the battery power discharge and charge possibilities, a corresponding diesel usage table is calculated using a lookup table that stores values for battery power equivalence based on various SOC conditions of battery array **140.**

Based on current operating parameters retrieved from the vehicle CANbus (e.g., engine torque and current gear ratios in the primary drivetrain) or optionally based on estimates calculated based on a high-precision inertial measurement unit (IMU) effective torque delivered at vehicle wheels by the fuel-fed engine and the primary drivetrain is calculated or otherwise computationally estimated at controller **228.** Potential supplemental torques that can be provided at wheels driven (or drivable) by electric motor-generator **130A/130B** are blended with those calculated or estimated for vehicle wheels driven by the fuel-fed engine and primary drivetrain in a calculation that back-calculates where the various additional supplemental torques would place the vehicle's engine. Then, based on these new values for the fuel-fed engine and primary drivetrain, a vehicle fuel usage consumption table is updated and, in turn, combined with (computationally summed) a charge/fuel usage table for electric motor-generator **130A/130B.** Based on the current SOC, SOC targets, and SOC hysteresis, a minimum index value from the discharge fuel usage table or the charge fuel usage table is used. A motor torque at this index is retrieved from the motor torque possibilities table, and this torque demand is sent to electric motor-generator **130A/130B** via any local controller (e.g., sevcon controller **202**) to be applied as supplemental torque via the electric drivetrain in a TTR hybrid configuration.

To optimize the usage of a parallel TTR hybrid, such as the system(s) illustrated in **FIG. 1A****,** electric drive controllers **150A/150B/150** need to cause electric motor-generators **130A/130B** to supply a specific amount of assistive propulsion to save the most amount of fuel over time. As previously explained, different engines produce different amounts of power based on the fuel supplied to them at different engine rpms. BSFC type data is one way of characterizing, for a given fuel-fed engine, efficiency as a function of engine speed (RPM) and torque. Accordingly, in some embodiments, BSFC type data is generated, refined or obtained for the specific paired-with fuel fed engine based on techniques described herein (whether signature based retrieval, iterative adaptation or crowdsourcing) and used in the ECMS strategy explained above.

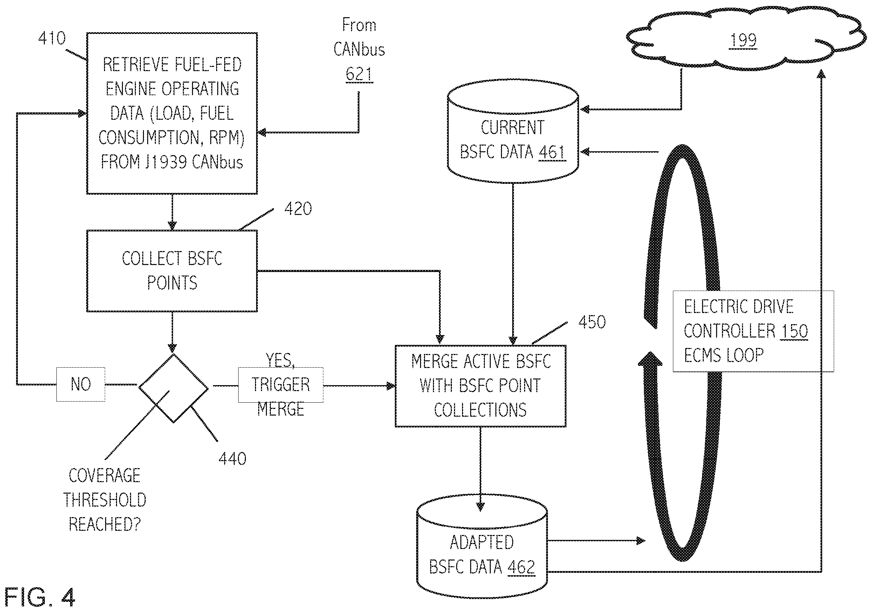

Finally, in some embodiments, we adapt generic BSFC curve data to the truck's performance over-time. Adaptation can occur while the electric drive axle(s) is (are) not in use, either before TTR hybrid operation engages over an initial "learning period" or while the system is out of battery during extended periods of inactivity. Adaptation may also, or alternatively, occur during the TTR hybrid operation. In such cases, the supplemental torques applied using the electric drive axle(s) can be equalized and accounted for with larger error correction needed for vehicle dynamics. **FIG. 4** illustrates an exemplary computational flow for adapting BSFC type data characterization of a fuel-fed engine that has been paired-width electric drive axles and controllers in a TTR hybrid configuration.

In general, efficiency can be defined as *torque* / *fuel usage. Torque* can be calculated using engine *load * max_torque* for the engine in question. Engine *load, fuel usage* and *engine_rpms* are outputs available from the truck's ECM over the J1939 diagnostics bus while the *max_torque* would need to be obtained from the engine itself, OEM, or additional engine software settings. **FIG. 4** depicts retrieval (**410**) of operating parameters for a J1939 CANbus (recall CANbus **621,** **FIG. 1A**). These inputs allow us to collect (**420**) new points for our BSFC curve which is a multi-dimensional table that we have obtained (initially) in any of a variety of ways such as data retrieval from cloud-based telematics system service platform **199** based on an engine signature obtained via CANbus **621,** as crowdsourced data or simply as generic engine data for initial conditions. Adaptation of current BSFC data **461** is performed iteratively based, in the illustrated embodiment, on a coverage threshold **440**. With axes of *engine_rpm, torque* and *efficiency,* we take new points computed based on observations during the periods explained previously, and computationally merge (**450**) them into our current or generic BSFC curve data **461** over-time. Adapted BSFC data **462** is used in ECMS loop(s) of electric drive controller(s) **150A**/**150B**/**150** (recall **FIG. 1A**). In some cases, adapted BSFC data **462** is uploaded to cloud-based telematics system service platform **199** (typically together with engine operating data, geoposition, regional location or route data, weather or climatic data) and selectively supplied to other TTR hybrid vehicle systems as part of a crowd sourcing technique.

Based on weighted multipliers, the new updated BSFC data **462** will converge on values that more accurately characterize the particular, paired-with fuel-fed engine. Note that, as a practical matter, we need to make sure that when convergence updates are performed, new BSFC curve data sufficiently covers (**440**) the data set, so that we aren't updating only one half of the curve, potentially causing rifts and cliffs between efficiency zones, as such discontinuities can result in inefficiencies within an ECMS implementation. As actual engine performance is reflected in the adapted BSFC curve data **462**, the parallel TTR hybrid system applies better fuel efficiency predictions in its equivalent consumption minimization strategy (ECMS) to increase overall efficiency of the TTR hybrid system **100, 101.**

### Telematics System Interfaces and Network

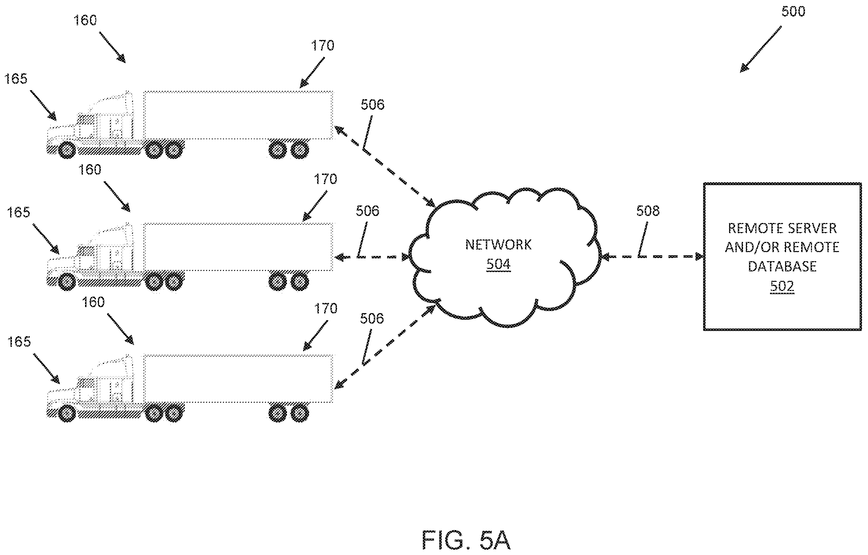

As explained herein, TTR hybrid systems **100, 101** may communicate with network-connected server, database, or other network-connected service platform such as cloud-based telematics system service platform **199.** **FIG. 5A** depicts an exemplary system **500** for providing communication between a tractor-trailer vehicle and a network-connected service platform. In some embodiments, one or more tractor-trailer vehicles **160** are configured to communicate with a remote server **502** by way of a network **504,** using one or more network communication devices.

The network **504** may be implemented as a single network or a combination of multiple networks. For example, in various embodiments, the network **504** may include the Internet and/or one or more intranets, landline networks, wireless networks, cellular networks, satellite networks, point-to-point communication links, and/or other appropriate types of networks. In some examples, the one or more tractor-trailer vehicles **160** and the remote server **502** may communicate through the network **504** via cellular communication, by way of one or more user-side network communication devices or server-side network communication devices. Thus, as merely one example, connections **506** between the one or more tractor-trailer vehicles **160** and the network **504** may include a 3G cellular connection, a universal mobile telecommunications system (UMTS) connection, a high-speed packet access (HSPA) connection, a 4G/L TE connection, a combination thereof, or other appropriate connection now existing or hereafter developed. Further, in an example, a connection **508** between the network **504** and the remote server **502** may include an Internet trunk connection. The Internet trunk connection may be used to simultaneously provide network access to a plurality of clients, for example, such as the one or more tractor-trailer vehicles **160.**

In other examples, the one or more tractor-trailer vehicles **160** and the remote server **502** may communicate through the network **504** via wireless communication (e.g., via a WiFi network), by way of one or more user-side network communication devices or server-side network communication devices. In yet other examples, the one or more tractor-trailer vehicles **160** and the remote server **502** may communicate through the network **504** via any of a plurality of other radio and/or telecommunications protocols, by way of one or more user-side network communication devices or server-side network communication devices. While some examples of communication between the one or more tractor-trailer vehicles **160** and the remote server **502** have been provided, other network configurations, components, and/or protocols may be used.

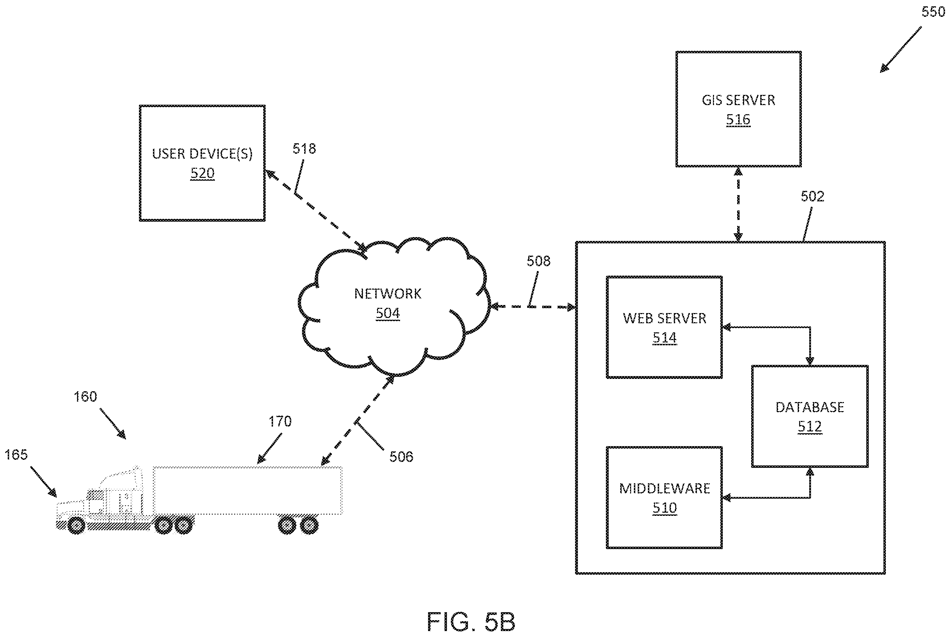

With reference to **FIG. 5B****,** illustrated therein is an exemplary system **550** for providing communication between a tractor-trailer vehicle and a network server or remote server/database. Various aspects of the system **550** are substantially the same as the system **500,** discussed above. Thus, for clarity of discussion, some features may only be briefly discussed **FIG. 5B****,** in particular, provides a more detailed view of the remote server **502.** As shown, the remote server **502** may include a middleware component **510,** a database **512,** and a web server **514.** I n various examples, each of the middleware **510,** the database **512,** and the web server **514** may be implemented using separate machines (e.g., computers/servers), or may be collocated on a single machine. The middleware **510** may be configured to receive and process data (e.g., BSFC type data and signatures) and store the data in the database **512.** The database 512 may be used to store any such data received from any of a number of tractor-trailer vehicles **160,** as well as to store customer/user account information, and store asset tracking information (e.g., for tracking the tractor-trailer vehicles **160**).

In some examples, the database **512** is implemented using a PostgreSQL object-relational database management system, enabling multi-node clustering. The web server **514** can be used to store, process, and deliver web pages (e.g., that provide a user-interface) to any of a plurality of users operating user devices **520.** In some embodiments, the user devices **520** may include any type of computing device such as a laptop, a desktop, a mobile device, or other appropriate computing device operated by any type of user (e.g., individual, driver, fleet manager, or other type of user). In some examples, connections **518** between the user devices **520** and the network **504** may include a 3G cellular connection, a universal mobile telecommunications system (UMTS) connection, a high-speed packet access (HSPA) connection, a 4G/LTE connection, an RF connection, a Wi-Fi connection, a Bluetooth connection, another wireless communication interface, combinations thereof, or other appropriate connection now existing or hereafter developed. In some embodiments, the remote server **502** may further couple to a geographic information system (GIS) server **516,** which provides maps for the GPS locations associated with data received vehicles.

In addition to the various features described above, the systems **500, 550** may be configured to provide real-time location and mapping of tractor-trailer vehicles **160** (including a tractor unit or trailer), an ability to assign tags to any particular tractor unit or trailer (e.g., to provide a trailer type, trailer number, group/region/fleet information, owner information, or contact information), an ability to provide on-demand and/or schedulable reports, among other features. By way of example, such reports may include a percentage time a trailer is loaded vs. empty, moving vs. stationary, and/or attached vs. standalone. Exemplary reports may further provide an approximate trailer weight, fuel savings information, shock/vibration information, braking information, adverse swaying (e.g., jack-knifing) information, lost traction/wheel-slip information, battery levels, and/or APU usage information. The systems **500, 550** also provide for the configuration of alerts (e.g., to alert a driver, fleet manager, or other user) for a variety of conditions such as aggressive braking, excessive shock, excessive idling, APU power low, overheating, unit damage, and/or battery or device failure, in some embodiments, the systems **500, 550** may further include an ability to set and/or otherwise define Operation Hours' for a given trailer and/or tractor unit, and alerts may be set for operation activity occurring outside the defined Operation Hours'. In some cases, the systems **500, 550** may also monitor driver behaviors (e.g., driving patterns), real-time traffic data, weather information, road conditions, and/or other such factors that may be used to determine a desired stopover location, an optimal navigation route to the stopover location, and/or an estimated time of arrival (ETA) at the stopover location. For example, in some embodiments, one or more of the above features may be implemented in part using a vehicle navigation system (e.g., such as a GPS navigation system) on the tractor-trailer vehicles **160,** where the navigation system incorporates the traffic data, weather information, road conditions, etc. to determine the route and ETA to the stopover location. While some examples of various features provided by the systems **400, 450** have been provided, other features may be implemented.

### Variations and Other Embodiments

Where applicable, various embodiments provided may be implemented using hardware, software, or combinations of hardware and software. Also, where applicable, the various hardware components and/or software components set forth herein may be combined into composite components comprising software, hardware, and/or both. Where applicable, the various hardware components and/or software components set forth herein may be separated into sub-components comprising software, hardware, or both. in addition, where applicable, it is contemplated that software components may be implemented as hardware components and vice-versa.

Software, in accordance with the above, such as program code and/or data, may be stored on one or more computer readable mediums. it is also contemplated that software identified herein may be implemented using one or more general purpose or specific purpose computers and/or computer systems, networked and/or otherwise. Where applicable, the ordering of various steps described herein may be changed, combined into composite steps, and/or separated into sub-steps to provide features described herein.

## Claims

1. A control method for a vehicle having an electric drive axle (180) configured to supplement a primary source of motive torque, the method comprising:
through a primary drivetrain (628), supplying motive torque generated using a particular fuel-fed engine;
during over-the-road travel, supplying supplemental motive torque using the electric drive axle, wherein an electric drive controller (150) therefor applies an equivalent consumption minimization strategy (ECMS) using a first set of brake-specific fuel consumption (BSFC) type data based on a plurality of fuel-fed engines to characterize efficiency of the particular fuel-fed engine with which the electric drive axle is paired in a through-the-road (TTR) hybrid configuration; and
adapting the application of the ECMS based on a second set of BSFC type data based on a signature of the particular fuel-fed engine and thereafter continuing to supply supplemental motive torque during over-the-road travel using the electric drive axle under control of the electric drive controller with the adapted ECMS applied.

2. The control method of claim 1, wherein the first set of BSFC type data includes a data set based on the first plurality of fuel-fed engines configurations, wherein the first plurality of fuel-fed engines includes the particular fuel-fed engine.

3. The control method of claim 1, further comprising:
computing the second set of BSFC type data based on vehicle parameters retrieved via an on-vehicle controller area network interface during over-the-road operation of the vehicle.

4. The control method of claim 1,
wherein the vehicle includes a trailer (170) portion having the electric drive axle (180) and wherein the trailer portion is initially coupled to a first tractor unit (165) that provides the fuel-fed engine and the primary drivetrain,
the method further comprising:
prior to the adapting of the ECMS, and after decoupling from the first tractor unit, coupling to a second tractor unit that provides a second fuel-fed engine different from the fuel-fed engine; and
retrieving the second set of BSFC type data from an off-vehicle information store based on a signature retrieved via an on-vehicle controller area network interface, the retrieved signature indicative of the second fuel-fed engine.

5. The control method of claim 1, further comprising:
retrieving, via a radio frequency data communication interface, at least the first set of BSFC type data from an off-vehicle, network-connected service platform an information store that hosts an information store of BSFC type data for particular fuel-fed engines or classes thereof.

6. A system comprising:
a vehicle having an electric drive axle (180) configured to supplement, in a through-the-road (TTR) hybrid configuration, motive torque provided by a particular fuel-fed engine through a primary drivetrain; and
an electric drive controller (150) for the electric drive axle configured to apply an equivalent consumption minimization strategy (ECMS) using a first set of brake-specific fuel consumption (BSFC) type data based on a plurality of fuel-fed engines to characterize efficiency of the particular fuel-fed engine and to adapt the application of the ECMS based on a second set of BSFC type data based on a signature of the particular fuel-fed engine and thereafter continue to supply supplemental motive torque during over-the-road travel using the electric drive axle under control of the electric drive controller with the adapted ECMS applied.

7. The system of claim 6, wherein the electric drive controller (150) is not directly responsive to controls of the fuel-fed engine and primary drivetrain, but instead controls motive torque supplied by the electric drive axle (180) using the first and adapted second sets of BSFC type data to characterize efficiency of the particular fuel-fed engine with which the electric drive axle is paired in the through-the-road (TTR) hybrid configuration.

8. The system of claim 6, wherein the vehicle includes a tractor unit (165) having the particular fuel-fed engine, the primary drivetrain, the electric drive axle (180) and the electric drive controller (150) therefor.

9. The system of claim 8, further comprising:
a trailer (170) portion mechanically coupled to the tractor unit (165).

10. The system of claim 9, further comprising:
the trailer (170) portion having an additional electric drive axle coupled to the electric drive controller (150).

11. The system of claim 6, wherein the vehicle includes a tractor unit (165) having the particular fuel-fed engine and the primary drivetrain, and wherein the vehicle further includes a trailer (170) portion having the electric drive axle (180) and the electric drive controller (150) therefor.

12. The system of claim 6, further comprising:
a network-connected service platform; and
a radio frequency data communication interface by which the electric drive controller (150) retrieves one or more of the first and second sets of BSFC type data from the network-connected service platform.

## Patentansprüche

1. Steuerverfahren für ein Fahrzeug mit einer elektrischen Antriebsachse (180), dazu ausgelegt, eine primäre Quelle für Antriebsmoment zu ergänzen, wobei das Verfahren Folgendes umfasst:
über einen primären Antriebsstrang (628), Zuführen eines unter Verwendung eines bestimmten kraftstoffgespeisten Motors erzeugten Antriebsmoments;
während der Fahrt auf der Straße, Zuführen eines zusätzlichen Antriebsmoments unter Verwendung der elektrischen Antriebsachse, wobei eine elektrische Antriebsregelung (150) dafür eine äquivalente Verbrauchsminimierungsstrategie (ECMS) unter Verwendung eines ersten Satzes von spezifischen Kraftstoffverbrauchsdaten (BSFC) basierend auf mehreren kraftstoffgespeisten Motoren anwendet, um die Effizienz des bestimmten kraftstoffgespeisten Motors, mit dem die elektrische Antriebsachse gekoppelt ist, in einer Straßendurchgangs(TTR)-Hybridkonfiguration zu charakterisieren; und
Anpassen der Anwendung der ECMS basierend auf einem zweiten Satz von BSFC-Typdaten basierend auf einer Signatur des bestimmten kraftstoffgespeisten Motors und danach Fortsetzen des Zuführens eines zusätzlichen Antriebsmoments während der Fahrt über die Straße unter Verwendung der elektrischen Antriebsachse unter Steuerung der elektrischen Antriebsregelung, wobei die angepasste ECMS angewendet wird.

2. Steuerverfahren nach Anspruch 1, wobei der erste Satz von BSFC-Typdaten einen Datensatz basierend auf ersten mehreren Konfigurationen von kraftstoffgespeisten Motoren beinhaltet, wobei die ersten mehreren kraftstoffgespeisten Motoren den bestimmten kraftstoffgespeisten Motor beinhalten.

3. Steuerverfahren nach Anspruch 1, das ferner Folgendes umfasst:
Berechnen des zweiten Satzes von BSFC-Typdaten basierend auf Fahrzeugparametern, die über eine fahrzeuginterne Controller-Area-Network-Schnittstelle während des Straßenbetriebs des Fahrzeugs abgerufen werden.

4. Steuerverfahren nach Anspruch 1,
wobei das Fahrzeug einen Anhängerteil (170) mit der elektrischen Antriebsachse (180) beinhaltet und wobei der Anhängerteil anfänglich mit einer ersten Traktoreinheit (165) gekoppelt ist, die den kraftstoffgespeisten Motor und den primären Antriebsstrang bereitstellt,
wobei das Verfahren ferner Folgendes umfasst:
vor dem Anpassen der ECMS und nach dem Entkoppeln von der ersten Traktoreinheit, Koppeln mit einer zweiten Traktoreinheit, die einen zweiten kraftstoffgespeisten Motor bereitstellt, der sich von dem kraftstoffgespeisten Motor unterscheidet; und
Abrufen des zweiten Satzes von BSFC-Typdaten aus einem außerhalb des Fahrzeugs befindlichen Informationsspeicher basierend auf einer Signatur, die über eine fahrzeuginterne Controller-Area-Network-Schnittstelle abgerufen wird, wobei die abgerufene Signatur den zweiten kraftstoffgespeisten Motor angibt.

5. Steuerverfahren nach Anspruch 1, das ferner Folgendes umfasst:
Abrufen, über eine Funkfrequenzdatenkommunikationsschnittstelle,
mindestens des ersten Satzes von BSFC-Typdaten von einer außerhalb des Fahrzeugs befindlichen, netzwerkverbundenen Dienstplattform eines Informationsspeichers, der einen Informationsspeicher von BSFC-Typdaten für bestimmte kraftstoffgespeiste Motoren oder Klassen davon hostet.

6. System, das Folgendes umfasst:
ein Fahrzeug mit einer elektrischen Antriebsachse (180), die dazu ausgelegt ist, in einer Straßendurchgangs(TTR)-Hybridkonfiguration das von einem bestimmten kraftstoffgespeisten Motor durch einen primären Antriebsstrang bereitgestellte Antriebsmoment zu ergänzen; und
eine elektrische Antriebsregelung (150) für die elektrische Antriebsachse, die dazu ausgelegt ist, eine äquivalente Verbrauchsminimierungsstrategie (ECMS) unter Verwendung eines ersten Satzes von spezifischen Kraftstoffverbrauchsdaten (BSFC) basierend auf mehreren kraftstoffgespeisten Motoren anzuwenden, um die Effizienz des bestimmten kraftstoffgespeisten Motors zu charakterisieren und die Anwendung der ECMS basierend auf einem zweiten Satz von BSFC-Typdaten basierend auf einer Signatur des bestimmten kraftstoffgespeisten Motors anzupassen, und danach Fortsetzen des Zuführens eines zusätzlichen Antriebsmoments während der Fahrt über die Straße unter Verwendung der elektrischen Antriebsachse unter Steuerung der elektrischen Antriebsregelung, wobei die angepasste ECMS angewendet wird.

7. System nach Anspruch 6, wobei die elektrische Antriebsregelung (150) nicht direkt auf Steuerungen des kraftstoffgespeisten Motors und des primären Antriebsstrangs reagiert, sondern stattdessen durch die elektrische Antriebsachse (180) geliefertes Antriebsmoment unter Verwendung des ersten und des angepassten zweiten Satzes von BSFC-Typdaten steuert, um die Effizienz des bestimmten kraftstoffgespeisten Motors zu charakterisieren, mit dem die elektrische Antriebsachse in der Straßendurchgangs(TTR)-Hybridkonfiguration gepaart ist.

8. System nach Anspruch 6, wobei das Fahrzeug eine Traktoreinheit (165) mit dem bestimmten kraftstoffgespeisten Motor, dem primären Antriebsstrang, der elektrischen Antriebsachse (180) und der elektrischen Antriebsregelung (150) dafür beinhaltet.

9. System nach Anspruch 8, das ferner Folgendes umfasst:
einen Anhängerabschnitt (170), der mechanisch mit der Traktoreinheit (165) gekoppelt ist.

10. System nach Anspruch 9, das ferner Folgendes umfasst:
wobei der Anhängerteil (170) eine zusätzliche elektrische Antriebsachse aufweist, die mit der elektrischen Antriebsregelung (150) gekoppelt ist.

11. System nach Anspruch 6, wobei das Fahrzeug eine Traktoreinheit (165) mit dem bestimmten kraftstoffgespeisten Motor und dem primären Antriebsstrang beinhaltet und wobei das Fahrzeug ferner einen Anhängerteil (170) mit der elektrischen Antriebsachse (180) und der elektrischen Antriebsregelung (150) dafür beinhaltet.

12. System nach Anspruch 6, das ferner Folgendes umfasst:
eine netzwerkverbundene Dienstplattform; und
eine Funkfrequenzdatenkommunikationsschnittstelle, über die die elektrische Antriebsregelung (150) einen oder mehrere aus dem ersten und dem zweiten Satz von BSFC-Typdaten von der netzwerkverbundenen Dienstplattform abruft.

## Revendications

1. Procédé de commande pour un véhicule ayant un essieu de propulsion électrique (180) configuré pour compléter une source primaire de couple moteur, le procédé comprenant :
par le biais d'une chaîne cinématique primaire (628), l'alimentation en un couple moteur généré en utilisant un moteur thermique particulier approvisionné en carburant ;
durant le déplacement sur la route, l'alimentation en un couple moteur complémentaire en utilisant l'essieu de propulsion électrique, dans lequel un appareil de commande de propulsion électrique (150) pour celui-ci applique une stratégie de minimisation de consommation équivalente (« Equivalent Consumption Minimization Strategy », ECMS) en utilisant un premier ensemble de données de type consommation spécifique de carburant (« Brake-Specific Fuel Consumption », BSFC) sur la base d'une pluralité de moteurs thermiques alimentés en carburant pour caractériser le rendement du moteur thermique particulier approvisionné en carburant avec lequel l'essieu de propulsion électrique est apparié dans une configuration hybride le long de route (« Through-The-Road », TTR) ; et
l'adaptation de l'application de la ECMS sur la base d'un second ensemble de données de type BSFC sur la base d'une signature du moteur thermique particulier approvisionné en carburant et, après cela, la continuation de l'alimentation en le couple moteur complémentaire durant le déplacement sur la route en utilisant l'essieu de propulsion électrique selon la commande de l'appareil de commande de propulsion électrique avec la ECMS adaptée appliquée.

2. Procédé de commande de la revendication 1, dans lequel le premier ensemble de données de type BSFC inclut un ensemble de données basé sur la première pluralité de configurations de moteurs thermiques alimentés en carburant, dans lequel la première pluralité de moteurs thermiques alimentés en carburant inclut le moteur thermique particulier approvisionné en carburant.

3. Procédé de commande de la revendication 1, comprenant en outre :
le calcul du second ensemble de données de type BSFC sur la base de paramètres de véhicule récupérés par l'intermédiaire d'une interface de réseau d'appareil de commande embarquée, durant le fonctionnement sur route du véhicule.

4. Procédé de commande de la revendication 1,
dans lequel le véhicule inclut une partie remorque (170) ayant l'essieu de propulsion électrique (180), et dans lequel la partie remorque est initialement couplée à une première unité tracteur (165) qui fournit le moteur thermique approvisionné en carburant et la chaîne cinématique primaire,
le procédé comprenant en outre :
avant l'adaptation de la ECMS, et après le découplage de la première unité tracteur, le couplage à une seconde unité tracteur qui fournit un second moteur thermique approvisionné en carburant différent du moteur thermique approvisionné en carburant ; et
la récupération du second ensemble de données de type BSFC depuis un magasin d'information non embarqué, sur la base d'une signature récupérée par l'intermédiaire d'une interface de réseau d'appareil de commande embarquée, la signature récupérée étant indicative du second moteur thermique approvisionné en carburant.

5. Procédé de commande de la revendication 1, comprenant en outre :
la récupération, par l'intermédiaire d'une interface de communication de données à radiofréquence, d'au moins du premier ensemble de données de type BSFC depuis une plate-forme de service connectée par réseau non embarquée d'un magasin d'informations qui héberge un magasin d'informations de données de type BSFC pour des moteurs thermiques particuliers alimentés en carburant ou des classes de ceux-ci.

6. Système, comprenant :
un véhicule ayant un essieu de propulsion électrique (180) configuré pour compléter, dans une configuration hybride le long de route (« Through-The-Road », TTR), un couple moteur fourni par un moteur thermique particulier approvisionné en carburant par le biais d'une chaîne cinématique primaire ; et
un appareil de commande de propulsion électrique (150) pour l'essieu de propulsion électrique configuré pour appliquer une stratégie de minimisation de consommation équivalente (« Equivalent Consumption Minimization Strategy », ECMS) en utilisant un premier ensemble de données de type consommation spécifique de carburant (« Brake-Specific Fuel Consumption », BSFC) sur la base d'une pluralité de moteurs thermiques alimentés en carburant pour caractériser le rendement du moteur thermique particulier approvisionné en carburant et pour adapter l'application de la ECMS sur la base d'un second ensemble de données de type BSFC sur la base d'une signature du moteur thermique particulier approvisionné en carburant et, après cela, continuer d'effectuer l'alimentation en un couple moteur complémentaire durant le déplacement sur la route utilisant l'essieu de propulsion électrique selon la commande de l'appareil de commande de propulsion électrique avec la ECMS adaptée appliquée.

7. Système de la revendication 6, dans lequel l'appareil de commande de propulsion électrique (150) n'est pas directement réactif à des commandes du moteur thermique approvisionné en carburant et de la chaîne cinématique primaire, mais plutôt commande le couple moteur dont l'alimentation est effectuée par l'essieu de propulsion électrique (180) en utilisant le premier ensemble et le second ensemble adapté de données de type BSFC pour caractériser le rendement du moteur thermique particulier approvisionné en carburant avec lequel l'essieu de propulsion électrique est apparié dans la configuration hybride le long de route (« Through-The-Road », TTR).

8. Système de la revendication 6, dans lequel le véhicule inclut une unité tracteur (165) ayant le moteur thermique particulier approvisionné en carburant, la chaîne cinématique primaire, l'essieu de propulsion électrique (180), et l'appareil de commande de propulsion électrique (150) pour celui-ci.

9. Système de la revendication 8, comprenant en outre : une partie remorque (170) couplée mécaniquement à l'unité tracteur (165).

10. Système de la revendication 9, comprenant en outre : la partie remorque (170) ayant un essieu de propulsion électrique supplémentaire couplé à l'appareil de commande de propulsion électrique (150).

11. Système de la revendication 6, dans lequel le véhicule inclut une unité tracteur (165) ayant le moteur thermique particulier approvisionné en carburant et la chaîne cinématique primaire, et dans lequel le véhicule inclut en outre une partie remorque (170) ayant l'essieu de propulsion électrique (180) et l'appareil de commande de propulsion électrique (150) pour celui-ci.

12. Système de la revendication 6, comprenant en outre :
une plate-forme de service connectée par réseau ; et
une interface de communication de données à radiofréquence par le biais de laquelle l'appareil de commande de propulsion électrique (150) récupère un ou plusieurs des premier et second ensembles de données de type BSFC depuis la plate-forme de service connectée par réseau.
